Europäisches Patentamt

(19) European Patent Office

Office européen des brevets

(11) Publication number: **0 222 132**
**B1**

(12) # EUROPEAN PATENT SPECIFICATION

(45) Date of publication of the patent specification:
13.06.90

(51) Int. Cl.⁵: **G11B 20/10, G11B 20/14**

(21) Application number: 86113528.3

(22) Date of filing: 01.10.86

(54) **Digital data separator.**

(30) Priority: 10.10.85 IT 2243185

(43) Date of publication of application:
20.05.87 Bulletin 87/21

(45) Publication of the grant of the patent:
13.06.90 Bulletin 90/24

(84) Designated Contracting States:
DE FR GB NL

(56) References cited:
EP-A- 0 141 028
EP-A- 0 195 368
FR-A- 2 217 757
GB-A- 2 080 658
US-A- 3 238 462
US-A- 3 624 521
US-A- 3 810 234
US-A- 4 245 264

IBM TECHNICAL DISCLOSURE BULLETIN, vol. 18, no. 5,
October 1975, pages 1571-1573, New York, US; T.H.
MILLER et al.: "Statistical digital data separator"

(73) Proprietor: BULL HN INFORMATION SYSTEMS ITALIA
S.p.A., Via Martiri d'Italia 3, I-10014 Caluso (Torino)(IT)

(72) Inventor: Troletti, Bonifacio, Via Colture 31 A,
I-25047 Darfo-Boario Terme (BS)(IT)

ACTORUM AG

## Description

The present invention relates to a digital data separator for a recovery apparatus of binary information recorded on magnetic media, such as disks, diskettes, tapes, in frequency modulation (FM) or modified frequency modulation (MFM).

Successively read out binary 1 or 0 bits recorded in FM are identified by the presence or absence, respectively, of a pulse in the center of contiguous recorded cells.

Each cell is defined by two timing pulses. The first one defines the beginning of the cell and the second one defines the beginning of the subsequent cell.

The time interval of a cell varies according to the media used. For instance, in the case of an 8 inch diskette and FM recording, the cell has a nominal length of 4 microseconds. Therefore, the nominal time intervals between two subsequent pulses may be 2 microseconds or 4 microseconds.

In the case of a 5 1/4 inch diskette the nominal length of a cell is generally 8 microseconds.

In the case of MFM recording successively read out binary 1 or 0 bits are also identified by the presence or absence respectively of a pulse in the center of contiguous cells.

However, MFM recording differs from FM recording in that the timing pulse, defining the beginning of a cell, is absent when a pulse representative of a binary 1 information is presente in the center of such cell or in the preceeding one.

For MFM also, the time interval of the cell depends on the recording media. For instance, in case of an 8 inch diskette and MFM recording, the nominal length of the cell is 2 microseconds.

Therefore, the nominal interval time between two subsequent pulses can be 2, 3 or 4 microseconds.

In the case of a 5 1/4 inch diskette, the nominal length of a cell is generally 4 microseconds.

Further information on FM or MFM recording methods can be found in the IBM document GA 21-9257-1 entitled "IBM Two side diskette Original Equipment Manufacturers Information - Second Edition" dated Nov. 1977. The pulse sequence read out from the magnetic media support is applied to an input of a recovery system which supplies to an output the binary information related to the input pulse sequence.

Such pulse sequence periodically includes a so-called synchronization field (generally of 6 or 12 bytes), containing a predetermined number of pulses corresponding to a plurality of contiguous cells in which all "1" information bits or all "0" information bits have been recorded.

The synchronization field is used by the recovery system for locking in and for establishing if a pulse detected in the input is a timing pulse or a pulse representative of a recorded information bit. The recovery system is therefore able to correctly detect information recorded on the magnetic medium on the basis of the time interval between two subsequent pulses and the nature of such pulses. Unfortunately, data recovery through only measurement of the time interval between subsequent pulses is not reliable, since such interval may present a substantial deviation from its nominal value resulting in the misinterpretation of the pulse sequence during the recovery phase.

Such deviation results from two main causes. The first is due to speed changes in the magnetic media, that is in the rotational speed tolerances of the motor which drives the magnetic media.

The second is due to the so-called phenomenon of peak-shift of the recorded pulse. As it is well known in the art, such shift is primarily due to the mutual influence of adjacent pulses.

As known, such shift can be considered zero only when the recorded pulses density is constant, that is, if the interval between subsequent pulses is always equal.

Clearly this situation does not exist in FM and MFM recording except for the synchronization field. Therefore, the recovery system needs apparatus to correct for the causes of such errors.

The most known of these apparatuses are those which make use of an analogic phase lock oscillator.

Digital phase lock circuits have been recently suggested.

The IBM Technical Disclosure Bulletin Vol. 18 N.5, Oct 1975, pages 1571–1573 discloses a statistical digital data separator where a shift register stores samples of the read signal taken over a period corresponding to the maximum nominal duration of an interval between read pulses.

The shift register contents provide a "picture" of the read signal, which is periodically input to a ROS.

The ROS acts as an analyzer and outputs signals which predict data bits and a media speed error.

The media speed error information is used to change the sampling rate for the next following sampling period.

In GB-A 2 080 658 there is disclosed a digital data separator where (to summarize) a counter, incremented at high rate, measures the interval between subsequent read pulses.

The output of the counter is decoded to provide data and window signals.

The output of the counter is further input, in part, to a ROM which provides correction parameters for presetting the counter and loading a rotation correction register with rotational error information.

The rotation error information is obtained from the ROM on the basis of the deviation of the read data from a time reference.

In both the preceding cited references there is not clear discrimination between deviation caused by peak shift and deviation caused by speed error.

A more reliable implementation of digital data separator is disclosed in EP-A 0 141 028.

According to such patent application, the problem of recovering digital information recorded on magnetic media is solved by providing circuits able to identify, through the measurement of the actual interval between subsequent pulses, the synchronization field which is not affected by peak-shift but only by a possible speed error, and therefore to establish the speed error of the magnetic media as to a nominal speed during a time interval comprising a suitable number of read out pulses.

This information, updated at each synchronization field detection is used during the reading out of subsequent read out pulses to correct the interval measured between subsequent read out pulses, thus providing an interval measure only affected by peak-shift error of pulse n and n–1 defining the measured interval.

This information is applied to a peak shift recovery unit together with an information (supplied in feedback by the same recovery unit) defining, in suitable code, the entity and the direction of the peak-shift of read pulse n–1.

The deduction of the peak-shift of read pulse n–1 from the correct duration measure allows to calculate the nominal duration of the interval N between read pulse n–1, n and the entity and the direction of the peak-shift of pulse n.

The peak shift of pulse n is sent back for allowing to discriminate between nominal duration of the subsequent interval N+1 and peak-shift of the subsequent read pulse n+1 and so on.

Practically, to avoid the propagation and the accumulation of measurement errors, the peak-shift recovery system supplies in feedback not the peak-shift measurement obtained by a difference between measures, but an "equivalent" code representative of nominal and actual duration of a determined number of intervals between immediately preceeding read pulses.

The approach disclosed by EP-A 0 141 028 is extremely efficacious, provides a high discriminating capability, greater than the one offered by a lot of analogic circuits and by other digital circuits.

Substantially it follow a correction concept in two phases: a speed correction based on a precise speed measurement, speed being detected when peak-shift phenomena are missing, and a subsequent peak shift recovery.

However this approach is inherently affected by a limitation, that is, it cannot be used when the media speed variation occurs with a frequenoy equal or higher than the speed measurement frequency. It has been further verified that in case of low cost disks or tape unit, particularly "disk drivers" for flexible diskette with $5\frac{1}{4}$ inch diameter, speed swinging can occur with frequency of about 1KHz and amplitude of ± 5+8% as to the nominal speed.

When speed swinging of this frequency occurs the operation of the discriminating apparatus discloses by the mentioned application is seriously jeopardized.

It would be desirable to have a discriminating apparatus not only able to substantially offer the same performances provided by the apparatus disclosed in the mentioned application but also to operate with magnetic media subject to swinging up to 1KHz.

This is required to enable the generalized use of low cost actuating units.

The mentioned patent application has a further drawback in that the speed error correction is made by means of a read only memory. This memory is addressed by a code representative of the measured duration of the time interval elapsing between two read out pulses and by a code which is representative of the speed error. Therefore it acts as a transcoder by supplying in output a code representative of the correct duration of a time interval with respect to the speed error. In practice for the purpose of attaining an adequate resolution the use of a memory having at least a 2K addressable bytes capacity is required.

Furthermore this memory would be used to recognize the synchronization fields by identifying those intervals whose difference in the actual measured duration is lesser than certain prefixed limits.

These limits are different in case of MFM and FM recordings. To obtain an apparatus compatible with both types of recordings a signal, hence a preselection input defining the type of recording used must be provided. Therefore the required memory capacity rises up to 4K bytes. As a result the disclosed digital apparatus can only be embodied as an integrated circuit by using large-size and expensive chips.

These limitations are overcome in part by the digital apparatus for data recovery system described in the european application EP-A 0 195 368 (constituting prior art under Art. 54(3)). In this application a substantially continuous monitoring of the recording media speed and its error as to a nominal speed is achieved by detecting the peak shift direction of the pulses read out during predetermined subsequent periods and providing at the end of each such period a speed error code which is determined on the basis of the difference between number of detected leading peak shifts and number of lagging peak shifts.

This code is input to a transcoding memory which receives as further input a code indicative of the measured time interval between subsequent read pulses and outputs a code indicative of the interval between subsequent pulses and corrected as to speed error.

Even in this case circuits including a memory having a capacity in the range of 2:4 kbytes is required.

From this point of view a discriminator apparatus is advisable where the speed error correction requires circuits which can be more easily integrated.

These objectives are achieved by means of the digital data separator for an apparatus for reading of pulses recorded on magnetic media, which is recited in the appended claims. This separator carries out a correction of the intervals actual duration according to a speed difference defined through the measurement of the actual duration of a succession of N subsequent intervals and the comparison with the sum of the nominal duration of said intervals.

When measuring the actual duration of the interval succession both the peak-shift of the starting pulse of the first measured interval and the peak-shift of the ending pulse of the last measured interval are considered, so that no measuring errors are caused.

These operations are executed by a logical network combining the use of adders subtractors with read only memories, each having a capacity, whose total surface encumbrance is no greater than the equivalent of 0,5 K bytes.

These operations are continuously performed on any recorded field with a frequency no lesser than 15÷ 20 KHz, that is much higher than the frequency as which a speed change may occur.

As the detection of synchronization field is not required, the use of a signal discriminating between the different types of recording becomes unnecessary and the memory capacity can be further reduced. Since the definition of the nominal durations is only possible after the speed correction of the measured duration, the speed error correction could be considered as tautologic because involves the detection of nominal interval durations to be related to measured actual durations.

On the contrary the speed error correction can be actually carried out because in correspondence with the synchronization fields, which are not affected by peak-shift at least, it is possible to establish an univocal corrispondence between interval nominal and measured durations also when important speed errors are present.

In other words the locking of the recovery apparatus to the detected pulse sequence can anyhow be made.

According to another aspect of the present inventions, the speed error defined over a period made up of several subsequent intervals, and therefore the average value of a parameter which is continuously changing is not direcly used to execute a speed correction but to "extrapolate" as a function of a previously detected speed error, the speed error which comes closer to the forseable speed error conditions to be corrected.

In this way the apparatus response in dynamical conditions is prompt and precise.

These and other features and advantages will appear more clearly from the following description of a preferred embodiment of the invention and the enclosed drawing where:

Fig. 1 shows in block diagram a data processing system including the digital separator of the present invention.
Fig. 2 shows in block diagram the digital separator object of the present invention.
Fig. 3 shows in timing diagram some signals of the digital separator shown in Fig. 2.
Fig. 4 shows in detailed diagram a preferred embodiment of a speed error measuring unit of the data separator.
Fig. 5 shows in detailed diagram a preferred embodiment of a speed error correction unit of the data separator.
Fig. 6 shows in examplifying diagram the relationship between measured speed error and actual istantaneous error.
Fig. 7 shows in detailed diagram a preferred embodiment of an extrapolator for the unit shown in fig. 4.

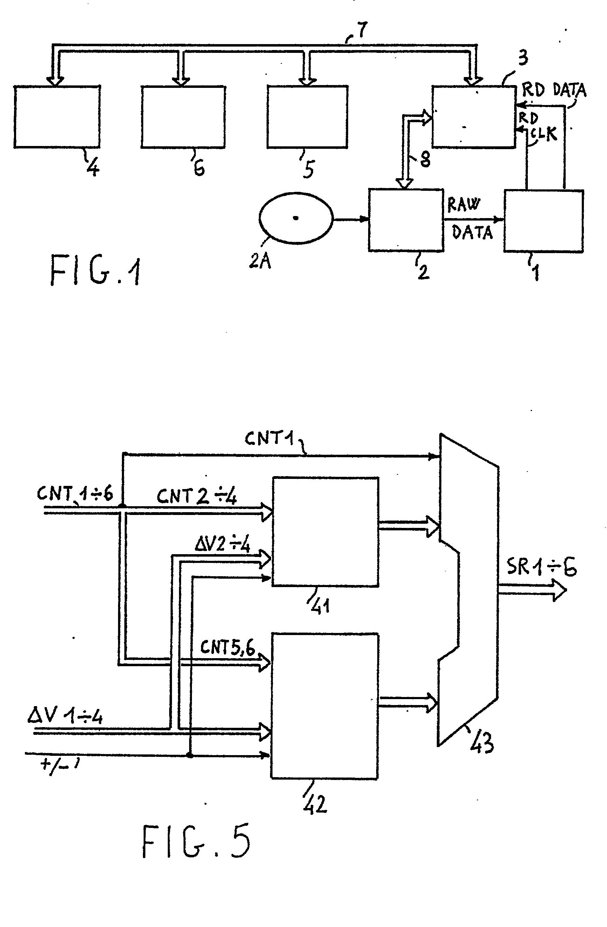

Figure 1 shows in block diagram a typical data processing system comprising the digital apparatus of the present invention.

Such apparatus, indicated by reference number 1, is positioned between a drive device 2 for a mass storage 2A and a controller 3. The system of fig. 1 further comprises a central processor 4, a peripheral controller 5 and a main memory 6.

Central processor 4, main memory 6 and controllers 3, 5 are connected to each other by means of a plurality of leads or system bus 7 through which data, addresses and control signals can be exchanged.

In the present embodiment assumption is made that the system mass storage is provided with a 5 1/4 inch diskette and that drive device 2 is constituted by a disk driver.

The consideration made in the following will be, however, valid for other kinds of storage devices too, as for instance, magnetic tape storages.

In the present embodiment, where a mass storage is provided by a diskette, a standard circuit chip, such as the 1791 integrated circuit chip, manufactured by Western Digital Corporation, can be used as controller 3.

Controller 3 and drive device 2 exchange a plurality of control and information signals through a channel or bus 8.

Detailed description of the circuits and interface signals between controller 3 and device 2 has been omitted since it is not essential for an understanding of the present invention.

In the case of the present invention embodiment, a 5 1/4 inch diskette having been used for mass storage together with integrated circuit chip 1791 manufactured by Western Digital as controller, the circuits and interface signals can be drawn from the specifcation of such products.

The same considerations are valid for the interface between controller 3 and recovery apparatus 1.

It is only pointed out that the recovery apparatus 1 must supply controller 3 with a square wave signal RDCLK and with a pulse train RD DATA at logical level 0, each pulse corresponding to a magnetic flux transition detected on recording media.

Pulses RD DATA and window signal RD CLK have only to fulfill the condition that each pulse RD DATA occur entirely within a half wave (or window) of signal RD CLK.

As for the rest, the pulse position relative to window signal RD CLK and the pulse length can be arbitrary. However, it is preferred that the length of a pulse RD DATA fall in the range of 100 to 250 nsec. and the delay of the beginning or end of a pulse relative to the transition of window signal RD CLK should be no longer than 40 nsec. Controller 3 does not need to be informed of whether each one of the pulses RD DATA corresponds to a timing transition or to a data transition.

The controller is able to distinguish between such transition from the pattern read out in response to the well known synchronization and "address mark" fields.

Also, the period of the timing or window signal can be variable and each of the two signals half waves may have a different length. Device 2 supplies digital apparatus 1 with a pulse RAW DATA in response to each detected magnetic flux transition. Since the disclosed system is intended to recover FM and MFM recorded information, the time intervals between subsequent pulses RAW DATA are indicative of such information. Apparatus 1, in response to the pulse train RAW DATA received as an input, supplies controller 3 with the window signal RD CLK and with the pulses RD DATA which correspond to the pulses RAW DATA suitably positioned relative to window signal RD CLK. Controller 3 is able by means of signal RD CLK to detect the information bits within the pulse train RD DATA and make them available in parallel form to system bus 7.

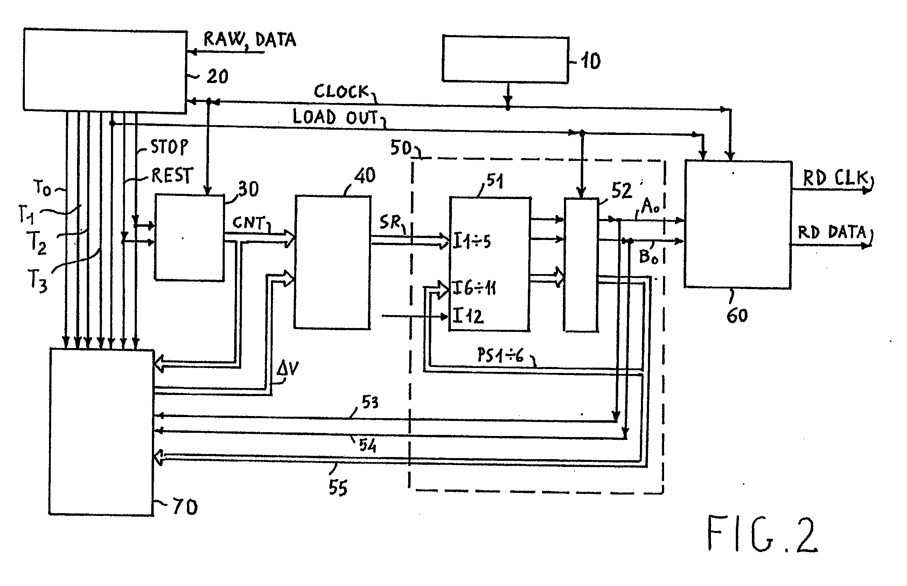

Figure 2 shows in block diagram form, the digital apparatus 1 of Fig. 1 which corresponds to the present invention. Apparatus 1 essentially comprises an oscillator 10, a timing unit 20, a logical unit 30 for measuring the interval duration between subsequent input pulses, a logical unit 40 for correcting such duration according to a speed difference as to a preestablished speed, a logic unit 50 for the peak shift recovery and the discrimination of the nominal duration corresponding to each interval, a logic unit 60 for reconstructing the read pulse train RD DATA within a window signal RD CLK generated by unit 60 itself and a unit 70 measuring and determining the speed difference as to a preestablished speed.

Oscillator 10 supplies units 20, 30 and 60 with a square wave a signal CLOCK having a frequency of 8 MHz.

Timing unit 20 is activated by each of the pulses RAW DATA and supplies a plurality of timing signals REST, STOP, T0, T1, T2, T3, LOAD OUT, to units 30, 50, 60, 70 in order to control and synchronize their operation. Particularly all the mentioned signals are sent to unit 70, while only signal LOAD OUT is sent to units 50, 60 and only signals REST, STOP are sent to unit 30.

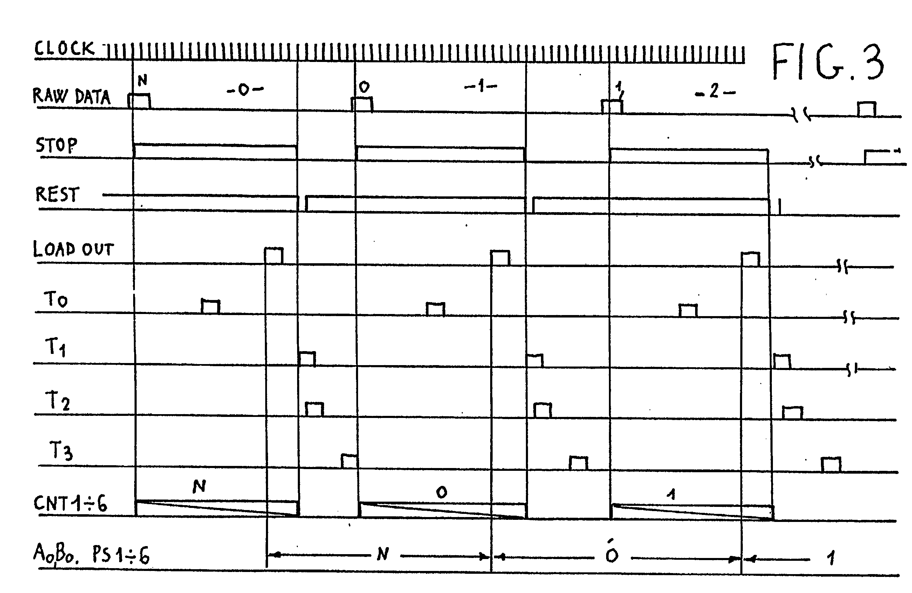

Timing unit 20 can be embodied in several ways, with shift registers, delay lines and particularly with the same components and connections shown in Fig. 3 of the already mentioned EP-A 0 141 028, therefore any further description is unnecessary.

For an easy understanding of the invention reference is made to Fig. 3 which shows in timing diagram the signals generated by oscillator and by unit 20 together with other signals which will be considered later on.

Diagram CLOCK is representative of signal CLOCK generated by oscillator 10.

Diagram RAW DATA is representative of the read pulses received from unit 20. The read pulses appear as asynchronous events as to signal CLOCK and at variable time intervals owing to the magnetic media speed errors and to the peak shift.

With the rise of signal CLOCK, immediately subsequent to the rise of signal RAW DATA, signal STOP rises to 1 and is kept at 1 for a duration of 19 CLOCK periods.

When signal STOP falls to 0 a signal REST, normally at 1 falls to 0 for a duration of one CLOCK period.

Signal TO, LOAD OUT, T1, T2, T3 rise to logical level 1 for the duration of two CLOCK periods, respectively after 8, 16, 19, 20, 25 CLOCK periods from signal STOP rising.

The sequence is triggered by pulse RAW DATA and, when the sequence is exhausted unit 20 remains unactive until a new trigger pulse is received.

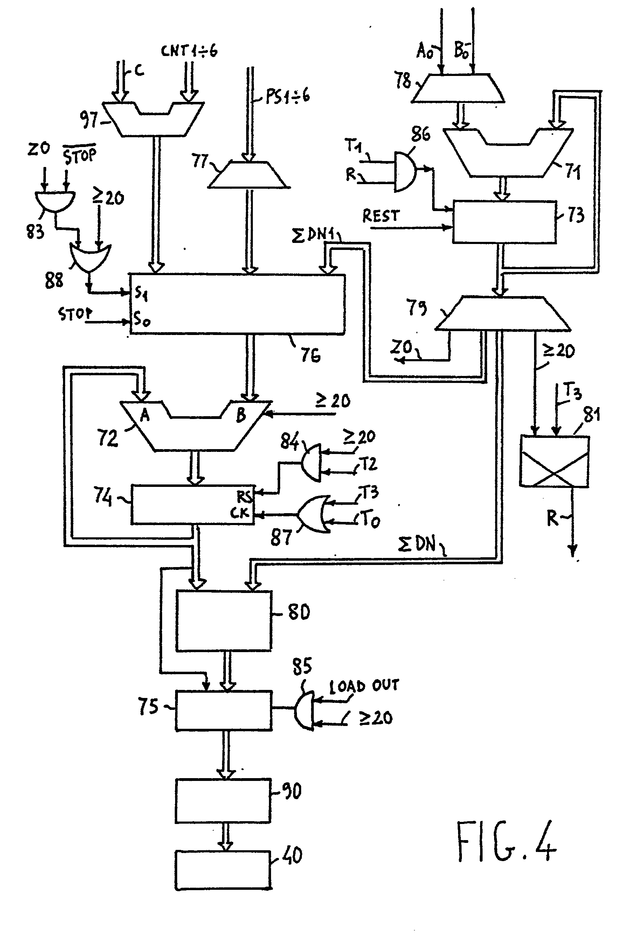

Measuring unit 30 is constituted by a six cell binary counter (practically two integrated counters as shown in Fig. 4 of the already mentioned EP-A 0 141 028) which is reset by signal REST at logical level 0 and increments at each CLOCK pulse received on a clock input for the whole time signal STOP, applied to a control input, is at logical level 0.

Counter/unit 30 stops when signal STOP is at logical level 1.

Counter/unit 30 supplies in output on a channel CNT a 6-bit binary code CNT1÷6 representative of the interval between the rising of two read pulses RAW DATA, expressed in CLOCK period number, less a fixed duration equal to 20 CLOCK periods (that is: 20 • 125 = 2500 nsec). The measurement is affected by a uncertainty owing to the asynchronous raising of pulses RAW DATA as to the CLOCK pulses.

The maximum value of such uncertainty is equal to two CLOCK periods that is ± 125 nsec.

Counter 30 is therefore able to measure, with a resolution of ± 125 nsec., time intervals varying from 2500 nsec. to 2500 + 125 • $(2^6-1)$ = 10.375 nsec.

Binary code CNT1÷6 remains unchanged for the whole time signal STOP is at logical level 1 and is applied in input both to speed difference recovery unit 40 and to the speed error measurement unit 70.

Unit 40 further receives through a 5 lead bus $\Delta V$ a binary code $\Delta0 ÷ 4$ representative of the speed error as to the media nominal speed.

Memory 40 acts as transcoder and changes code CNT1 ÷ 6 received on channel CNT to a 6-bit code SR 1 ÷ 6 representative of an interval duration between read pulses corrected in accordance to code $\Delta0 ÷ 4$ that is without speed error.

Code SR 1 ÷ 6 is applied, through channel SR, to peak shift recovery unit 50.

As shown in fig. 2, unit 50 is constituted by a permanent memory 51, having for instance a capacity of 4 K bytes and by an 8-bit latch register 52.

Memory 51 is provided with 12 address inputs I1 ÷ 12.

Five of them, I1 ÷ 5 receive code SR1 ÷ 6.

6 inputs I6 ÷ 11 are connected to six of the eight outputs of register 52 and the remaining input I12 receives a selection signal defining the kind of recording FM/MFM.

The outputs of memory 51 are connected to the inputs of register 52. The information in output from memory 51 is loaded into register 52 when the register is enabled by the rising edge of periodical signal LOAD OUT.

As widely described in the already mentioned EP-A 0 141 028, peak shift recovery unit 50 operates as follows.

Memory 51 is addressed by a code SR 1 ÷ 6 representative of the measured actual duration $DE_N$, corrected as concerns a possible speed error of an interval N between two read pulses n–1 and n.

It is further addressed in feedback by a 6-bit code (received through register 52) representative in coded form of the entity and direction (positive or negative) of peak shift $PS_{n-1}$ of read pulse n–1.

In other words, reminding that nominal duration $DN_N$ of interval N differs from duration $DE_N$ (corrected as concerns speed) owing-to peak shifts $PS_{n-1}$ and $PS_n$ of read pulses n–1, n which define interval N, that is:

$$DE_N = DN_N - PS_{n-1} + PS_n$$

quantity $DN_N + PS_n$ is defined and the discrimination between the two components is made possible.

Memory 51 contains transcoding codes which perform such discrimination and, for each addressable position, that is for each pair of information $DE_N$, $PS_{n-1}$, supply in output the pair of information $DN_N$, $PS_N$, that is a 2 bit binary code $A_0$, $B_0$, specifying whether the nominal duration is 4, 6, 8 usec., and a six bit binary code PS 1 ÷ 6 specifying in indirect way the entity and the direction of peak-shift PS n–1.

The codes A0, B0 and PS 1 ÷ 6 are loaded into register 52 and from there respectively sent to two inputs of unit 60 (code A0, B0) and to address inputs I6 ÷ 11 of memory 51 as well as to corresponding inputs of unit 70 through leads 53, 54 and bus 55.

It can be noted that peak shift recovery unit 50 is quite identical (apart from connection 53, 54, 55) to and operates in the same way as the corresponding peak shift recovery unit described in the mentioned EP-A 0 141 028 so that any detailed description is not required.

It is only to be pointed out that the transcoding codes recorded into memory 51 generate in output code PS1 ÷ 6 which is related to the peak shift (Code PS1 ÷ 6 is representative of the actual duration of an interval $DE_N$ and the nominal duration $DN_N$ and $DN_{N-1}$ of the same interval and of the previous one) as explained in the mentioned application.

This is necessary, in EP-A 0 141 028, to avoid the propagation and the accumulation of measurement errors.

Unit 50 too can be modified in such a way as to reduce considerably the memory capacity required for the peak-shift recovering.

These modifications are the object of a copending application EP-A 0 222 133.

Logic unit 60 timed by signals CLOCK and LOAD OUT, supplies in output according to code A0, B0, a timing window signal RD CLK and a data signal RD DATA, which can be detected by controller (Fig. 1).

Since logic unit 60 is identical to the one discloses in EP-A 0 141 028 and its description is unessential for the invention understanding, reference is made to this application for its architecture and operation details.

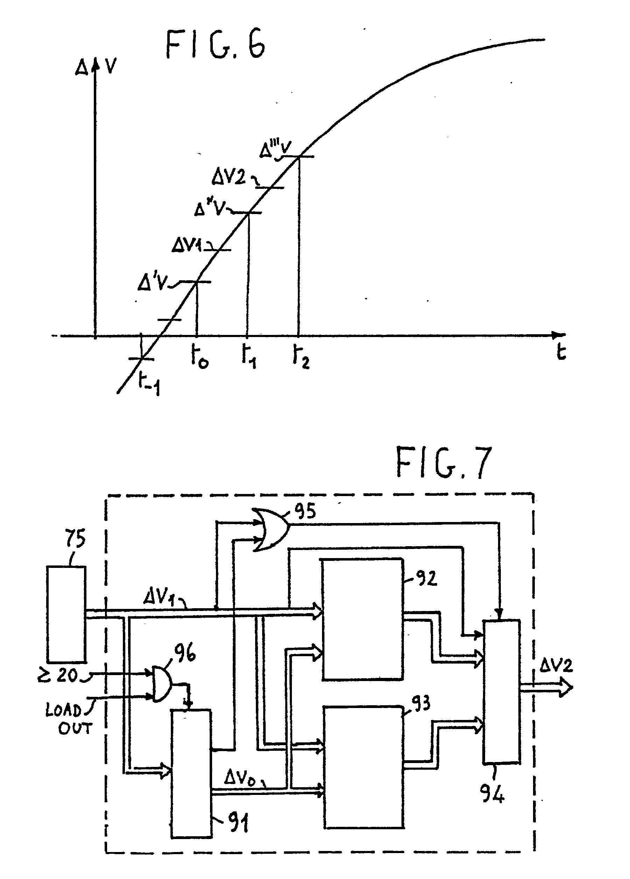

Speed error recovery unit 70 and speed error correction unit 40, which are the actual object of the invention, can now be considered with reference to fig. 4 and 5.

Unit 70 comprises two adders 71, 97 an algebrical adder 72, three latch registers 73, 74, 75, a multiplexor 76, three decoders 77, 78, 79 a read only memory 80, a D flip flop 81 four two inputs AND gates 83, 84, 85, 86 and two or gates 87, 88 with two inputs.

Code $A_0$, $B_0$ is applied in input to decoder 78 which changes it to a three bit binary code DN representative of the nominal duration of an interval as multiples of 2 usec, that is DN = 010 corresponds to 4 usec, DN = 11 corresponds to 6 usec and DN = 100 corresponds to 8 usec.

Code DN is applied to a first input set of adder 71.

The adder 71 outputs are connected to the inputs of register 73 which latches the result of the addition operation performed by adder 71. The register 73 outputs are connected to a second input set of adder 71 and to the inputs of decoder 79.

Register 73 is periodically loaded by rising edge or signal REST. Adder 71 and register 73 therefore operates as a total counter of interval nominal durations.

Starting from reset when the total counter reaches a reckoning value equal to or higher than 20 (corresponding to 40 usec) decoder 79 generates a signal "≥ 20" which is applied to the input of flip flop 81 and latched therein by pulse T3.

Then signal R rises in output from flip flop 81 and, suitably timed by signal T1 through AND gate 86, resets register 73.

Decoder 79 supplies in output, besides signal "≥ 20" signal "Z0" which is present when register 73 is reset, a multiple bit code Σ DN1 representative, with the same measuring unit through which CNT is represented, of the sum of the nominal duration of the reckoned intervals, and a two bit code Σ DN representative of the total of the reckoned interval nominal duration, that is 40 or 42, 44, 46 usec.

In fact the total counter sums the duration of intervals whose duration can be of 4, 6, 8 usec so that their sum could be higher than 40 usec. Code DN1 is applied to the first input of a three input multiplexer 76.

A code CNT 6 plus a constant C equivalent to 2500 nsec are applied to a second input through adder 97 and a code PS1 ÷ 6 is applied to the third input through decoder 77.

The function of decoder 77 (for instance a 6 address ROM) is to change the code in output from unit 50 into a code representative of the entity and the direction of a pulse peak-shift and expressing it in the same measurement unit used for expressing CNT and DN1.

By convention the peak shifts are considered as positive when the pulses are in advance of their nominal position and negative when the pulses are delayed.

The multiplexor input selection is controlled by suitable signals applied to selection inputs S0, S1.

When S0 = 1 and S1 = 0 the second input is selected (code CNT ÷ 6).

When S0 = 0 and S1 = 1 the third input is selected (code PS1).

When S0 = 1 and S1 = 1 the first input is selected (code Σ DN1) S0 receives signal STOP.

Input S1 receives signal ≥ 20 through OR gate 88 as well as a signal in output from AND gate 83, which in turn receives signals ZO and STOP at its inputs.

The output of multiplexer 76 is connected to input B to adder 72 whose output is connected to the input to register 74.

The output of register 74 is connected to a second A input to adder 72.

The addition subtraction function is controlled by signal ≥ 20 applied to counter 72.

When signal ≥ 20 is not present, adder 72 executes algebric sums.

When signal ≥ 20 is present, adder 72 algebrically subtracts from the binary code present on input A the code present on input B.

Register 74 acts as a total register and is loaded when the rising edge of signal T0 or T3 is applied to the clock input through OR gate 87.

Register 74 is reset by timing pulse T2 through AND gate 84 when signal "≥ 20" is present.

The operation of the disclosed circuital elements can be easily understood by reference to timing diagrams shown in fig. 3, where for a better understanding, the pulses RAW DATA are numbered by N, 0, 1, as well as the intervals between read pulses.

In Fig. 3 it is shown that a code CNT 1 ÷ 6 relative to each interval (indicated by N, 0, 1, . . .) is valid for the whole time elapsing between two subsequent pulses LOAD OUT. During the interval numbered by 0 a code CNT 1 ÷ 6 is available which, added to is selected by multiplexor 76 and summed to the reckoning already presente in register 74 and then loaded into register 74. During the same interval on the occurrence of pulse REST, signal ≥ 20 is generated. This signal causes the selection of code PS1 by multiplexor 76, the control in substraction of counter 72 and the loading into register 74 of the previously recorded total deducted of the algebric value PS1 corresponding to pulse N.

It is clear that if PS1 is positive (earlier peak shifts) this value is actually deducted; whereas it is summed if PS1 is negative. During the interval numbered by 1, as signal ≥ 20 is still present, multiplexor 76 selects in input code Σ DN1 wnich is deducted from the previous total by counter 72.

The result is loaded into register 74 on receipt of pulse TO. At this point register 74 contains a code representative of the entity and direction of the actual duration related to a succession of intervals, deducted their nominal duration and further corrected, in excess or default according to the algebric value of the last and first pulse peak-shifts of the measurement period.

The value of such a difference, referred to N intervals, whose nominal duration is given byΣDN, is applied in input to ROM 80 receiving on a pair of inputs the information Σ DN.

ROM 80 acts as a normalizer, that is, it converts or divide the code in input by the quantity indicated byΣDN and generates in output a percent speed error code Δ V.

This code is loaded into register 75 on receipt of signal LOAD OUT together with signal ≥ 20.

Straight after, register 73 is reset with pulse T1 in AND with signal R (in output from flip-flop 81) and signal ≥ 20 falls to zero. Instead signal ZO is generated which in AND with pulse T2 resets register 74.

A new measuring cycle is therefore started.

During the interval numbered by 1 code PS1, related to the peak-shift of pulse numbered by 0, is loaded into register 74 at pulse T3. At pulse TO code CNT 1 ÷ 6+C defining the measured duration of interval 1, is summed to PS1 and loaded into register 74.

At signal REST, code DN representative of the nominal duration of interval 1, is loaded into register 73.

During the subsequent intervals the actual (CNT1 ÷ 6+C) and the nominal durations (DN) of the subsequent intervals are summed in register 74 and 73 respectively, until the nominal duration present in register 73 is equal or higher than the value of 20 intervals of 2 μsec each. With respect to the speed error measuring process, where the error is the difference between the sums of the actual and nominal durations the following considerations have to be made:

1) The actual measurement of each interval is carried out with a resolution of 125 usec and therefore with an uncertainty of ± 125 μsec. However, since the measured period is given by subsequent intervals, the uncertainty of the intermediate intervals are compensated and the actual measurement of the period is affected by uncertainty and a possible error of ± 125 usec. As the chosen nominal duration of the measured periodo is a value ranging between 40 and 46 usec, the uncertainty or measuring error does not exceed 3⁰/₀₀.

2) The peak-shift value, used to correct the measured period is a value resulting from information corrected as to speed error. For a conceptually exact correction, these values should be adjusted according to the speed error, that is they should be increased or reduced according to the speed error.

However, bearing in mind that the time entity of the single peak-shift does not exceed 25% of the nominal duration of the shorter interval, that is it is within ± 1 usec, and bearing in mind also that the speed error does not exceed ± 10% the error caused by this approximation does not exceed ± 200 usec that is, in the most case; does not exceed 5%.

The speed error is therefore measured with a maximum error not exceeding 0,8%.

3) The value field that register 74 must represent, assuming a maximum speed error of ± 10%, a maximum peak-shift of 1 usec and a maximum duration of the measured period of 46 usec., is equal to ± (4,6+2)=+6,6 μsec.

This field can be expressed with a resolution of 125 usec. by a 6 bit and one sign bit code.

The information in output from register 74 can be therefore constituted by a 7 bit code one of which (the sign bit) bypasses normalizer 80 to be loaded into register 75.

The less meaningful bit of the code in output from register 74 can be ignored causing in the error measurement a default approximation of 125 usec, therefore lower than 3⁰/₀₀.

It is therefore clear that normalizer 80 can be consituted by a 5+2 inputs ROM, with 128 addressable location and output code ΔV, covering a ± 10% range, can be constituted by a sign bit and 4 entity bits, with a resolution equal to approximately 0,6%.

While apparently complicated, unit 70 can be easily integrated in a single semiconductor chip together with the other units 20, 30, 40, 50, 60.

As the disclosed unit 70 defines the speed error by measurements of subsequent periods having a duration ranging from 40 to 46 usec and therefore with a frequency exceeding 20 KHz, it is clear that it can detect with a fair precision and negligible delay speed variations with frequency in the order of 1 KHz.

Figure 5 shows in circuital form a preferred embodiment of speed error correction unit 40 which minimizes the size of the ROM designed for this operation.

The embodiment is based on the following concepts: Code CNT 1 ÷ 6 is representative of the measured duration of an interval deducted 2500 usec.

The required correction is logically constituted by the addition of 2500 usec to the code and by the percent correction of the total according to the speed error.

Code CNT 1 ÷ 6 may be considered as constituted by two elements: a most meaningful portion measuring the interval in an approximate way and a less meaningful additional portion measuring the interval more precisely.

It is therefore possible to carry out the percent correction of the two parts separately and then to sum up the results.

Furthermore as the correction modifies the measured duration of a quantity no greater than ± 10% the omission of such correction for the less meaningful bit or bits causes negligible errors.

As the less meaningful bit is representative of a duration of 125 nsec the omission of the correction causes an error of ± 12,5 nsec to occur which is completely negligible if compared with the measured uncertainty of ± 125 nsec.

In the same way if no correction is made to the next more significant bit this will cause a maximum error of ± 25 sec to occur, which is still a negligible error.

A further concept is that the correction brought with a 5 bit error code DN is executed with a resolution of approx. 0,6%.

Therefore the correction executed with a rounded off 4 bit code, hence with a resolution of about 1,2%, on the less meaningfulbits of code CNT 1 ÷ 6 causes negligible errors to occur.

Specifically a correction made to the bits of weight 1(250 nsec) 2 (500 nsec) 3 (1000 nsec) with resolution of 1,2% instead of 0,6% causes a possible error of 1,5 ns, 3 ns, 6 ns respectively whose sum is 105 ns which is negligible with respect to duration of the measured intervals (from 4 to 8 μsec nominal).

Unit 40 is therefore constituted by a first 7 input ROM 41, by a second 7 input ROM 42 and by a three input adder 43.

The less significant CNT1 bit of code CNT 1 ÷ 6 is directly applied to a first input of adder 43.

Bits CNT 2 ÷ 4 are applied to ROM 41 inputs together with bits ΔV2 ÷ 4 and sign of code ΔV.

Bits CNT 5 ÷ 6 are applied to ROM 42 inputs together with the whole code ΔV.

ROM 41 and 42 outputs are applied to corresponding inputs to adder 43.

ROM 42 executes the speed corrections, by transcoding of the most meaningful portion of code CNT1 ÷ 6 and the "implicit" quantity of 2500 nsec while ROM 42 executes the speed correction (with rounding of speed error) on the less meaningful portion, the less significant bit excluded.

The quantities in output from the ROMS are then summed up to generate a correct duration code SR 1 ÷ 6.

It is clear that the information in output from the ROMS can be constituted by codes having number of bits higher than 6, for istance 8, in order to cause negligible rounding off in counter 43 and then only the most meaningful portion of output code SR can be used.

The described operations of speed error measurement and correction executed by units 70 and 40 are independent of the recording type. It is therefore clear that without waste in resolution, but on the contrary with an improvement of it, these operations can be executed by ROMS whose total capacity is in the order of 463 addressable locations, much less than 4K bytes which are required by the mentioned patent application.

The need for summing networks, registers and additional logical elements is largely compensated by this important reduction in the required memory capacity.

The digital apparatus object of the present invention can be further refined, that is it can define an extrapolated speed error closer to the error condition occurring in the period when the speed error code is used for executing the correction.

From the above it is in fact clear that the speed error is measured over a period of N intervals, whose duration ranges from 40 to 46 usec., and then used over a subsequent period of similar duration.

Under condition of speed variability at a frequency lower than 1KHz or with amplitude in the order of few percents, only negligible speed changes occur from one measuremente period to the next one. They become important in presence of frequencies of about 1 KHz and amplitude in the order of ±10%.

Fig. 6 shows this problem.

Fig. 6 shows the quarter wave of a sinuisoidal speed variation with frequency of 1 KHz and amplitude equal to 10 %.

If the speed error is measured over a period of 40 usec starting from instant t0, the speed error measured and loaded into register 75 at instant t1 is

ΔV1 that is, approximatively, the average between error Δ'V at instant t1.

This error is used to correct the speed of interval t1, t2 where the speed error furtherly increases from value Δ"V to value Δ"'V It is therefore clear that the speed error is corrected minimally and that a better correction would be obtained using a value DV2 ranging between Δ"V and Δ"'V or, at least, equal to Δ"V.

Fig; 7 shows a logical network 90 which executes this correction and which can be suitably interposed between the output of register of fig. 4 and the error correction network shown in fig. 5.

Network 90 comprises a register 91, two ROM memories 92, 93, a multiplexor 94, an OR gate 95 and an AND gate 96.

The output from register 75 are connected to the inputs to register 91. The loading of register 91 is timed by the rising edge of pulse LOAD OUT, when signal ≥ 20 is present, applied to the register clock input.

In other words register 91 is loaded synchronously with register 75 so that if register 75 contains a generical speed error ΔV1, register 91 contains speed error ΔV0 measured in the previous period.

The most meaningful bit of codes ΔV0 and ΔV1 is applied in input to OR gate 95 whose output is connected to the selection input to multiplexor 94.

The outputs from ROM 92 are connected to a first set of inputs to multiplexor 94 and the outputs from ROM 93 are connected to a second set of inputs.

If the most meaningful bit of at least one of the codes ΔV0 and ΔV1 is 1 multiplexor 94 transfers in output the code present at the output from the ROM 92 whereas if it is 0 it transfers the code present at the output from ROM 93.

ROM 92 receives in input the four amplitude bits fo code ΔV1 and the four amplitude bits of code ΔV0 in output from register 91.

The sign bit of code DV1 instead, by passes ROM92 and is directly applied in input to multiplexor 94.

It is clear that, if the speed error is very high (most meaningful bit equal to 1) during two subsequent speed error measured periods, the speed error sign cannot change because the speed fluctuation period is of a greater order of magnitude.ROM 92 can therefore execute a linear extrapolation of the only speed error amplitude generating in output a code ΔV2 to which the same sign of code ΔV1 is applied.

The operation executed by ROM 92 is conceptually as follows:

$$| \Delta V2 | = | \Delta V1 | + ( | \Delta V1 | - | \Delta V0 | ).$$

Practically to avoid oscillation phenomena in the measuring system, due to the measure uncertainty intrinsic to ΔV1 and ΔV0 it is suitable to limit the extrapolation to a lower value, according to a formula of the following kind:

$$\Delta V2 = \Delta V1 + ( | \Delta V1 - I1 | - | \Delta V0 + I0 | )$$

where I1 and I0 are uncertainty margin assigned to ΔV1 and ΔV0. ROM 93, instead, receives in input three bits of lower weight of code ΔV1 and ΔV0 and the related sign and executes on these bits, an extrapolation similar to the previous one but: in algebric form, so generating in output an extrapolated error code.

It is therefore clear that the use of two ROMs, whose total capacity is equal to 512 addressable locations, permits to obtain an extrapolated speed error value DV2 which approximates with considerable precision the actual value.

It is obviously that with a little limitation of the correction performed by network 90, for istance disregarding the less significant bit of code ΔV0, the network can be embodied by ROMs having 128 locations each.

It is clear that the reference to ROM memories for the execution of transcoding operations includes functionally equivalent devices such as logic matrixes and similar devices.

## Claims

1. Digital data separator for an apparatus for reading of pulses recorded on movable magnetic media affected by a media speed error, where the read pulses are affected by peak-shift, comprising a duration measuring unit (30) for supplying a measure of the actual duration of each of the interval between two subsequent read pulses, a speed error correction unit (40) for changing said actual duration to a duration corrected for the media speed error, a peak shift recovery unit (50) for attributing to said corrected duration an interval nominal duration and a recovered peak-shift amount of the read pulse ending said interval and for generating in output a nominal duration code representing said nominal duration and a peak-shift code representing said recovered peak-shift amount respectively, and a speed error measuring unit (70) for periodically measuring said media speed error, characterized in that said speed error measuring unit (70) comprises:

- first addition means (71, 73, 79, 81, 86) for summing the nominal durations of a plurality of subsequent intervals, until the total duration of said intervals is equal or longer than a preestablished duration, and for supplying in output a first code representative of said total duration,

- second algebraic addition means (76, 72, 74) having inputs for receiving said actual duration of each of the intervals, said peak-shift code and said first total duration code, for computing the difference between the sum of the actual durations of said plurality of subsequent intervals and the sum of their nominal durations, said difference being further corrected for the recovered peak shift amounts of the starting pulse of the first of said subsequent intervals and of the ending pulse of the last of said subsequent intervals so that said difference represents the speed error of said plurality of subsequent intervals, said second means supplying in output a second code representative of said difference and

- normalization means (80) having inputs for receiving said first and said second code and an output for supplying said media speed error by normalizing said difference on the basis of the total duration of said plurality of subsequent intervals.

2. Digital data separator as per claim 1 where said speed error unit (40) comprises a first transcoder (41), a second transcoder (42) and an adder (43), said first transcoder receiving in input less significant bits of a code representative of an interval actual duration and more significant bits of said speed error code and supplying in output a first corrected duration code, said second transcoder receiving in input more significant bits of said code representative of an interval actual duration and said speed error code and supplying in output a second corrected duration code, said adder executing the sum of said first and second corrected duration code and supplying in output a code representative of speed corrected interval duration.

3. Digital data separator as per claim 1 where said speed error measuring unit comprises speed error extrapolation means (90) consisting of a register (91) for recording a speed error code measured on a first period of subsequent intervals and of a transcoder (92, 93) receiving in input said error code measured on a first period of subsequent intervals and a speed error code measured on a second period of subsequent intervals, subsequent to said first period, said transcoder supplying in output a speed error code related to a third period of subsequent intervals, subsequent to said second period, on the basis of an extrapolation of the speed error codes measured on said first and second periods.

**Patentansprüche**

1. Digitaldaten-Trennschaltung für ein Gerät zum Lesen auf einem beweglichen, mit einem Geschwindigkeitsfehler behafteten Magnetträger aufgezeichneten Impulsen, die einer Impulsspitzenverschiebung ausgesetzt sind, mit
einer Zeitdauer-Meßeinrichtung (30) zur Vorgabe eines Maßes für die tatsächliche Dauer jedes Intervalls zwischen zwei aufeinanderfolgenden Leseimpulsen;
einer Geschwindigkeitsfehler-Korrektureinheit (40) zum Ändern dieser tatsächlichen Dauer in Richtung auf eine um den Geschwindigkeitsfehler korrigierte Dauer;
einer Wiedergewinnungseinheit (50) für die Impulsspitzenverschiebung, welche der korrigierten Dauer eine Intervall-Nenndauer sowie einen wiedergewonnenen Betrag der Impulsspitzenverschiebung des das Intervall beendenden Impulses hinzufügt und am Ausgang einen die Nenndauer repräsentierenden Nenndauer-Code sowie einen den wiedergewonnenen Betrag der Impulsspitzenverschiebung repräsentierenden Impulsspitzenverschiebungscode erzeugt; und
einer Geschwindigkeitsfehler-Meßeinrichtung (70) zum periodischen Messen des Geschwindigkeitsfehlers des Magnetträgers; dadurch gekennzeichnet, daß die Geschwindigkeitsfehler-Meßeinrichtung folgendes umfaßt:
– eine erste Addiervorrichtung (71, 73, 79, 81, 86) zum Summieren der Nenndauerwerte mehrerer aufeinanderfolgender Intervalle, bis die Gesamtdauer dieser Intervalle gleich oder länger ist als eine vorgegebene Zeitspanne, und zur Abgabe eines ersten Codes, welcher der genannten Gesamtdauer entspricht;
– eine zweite algebraische Addiervorrichtung (76, 72, 74) mit Eingängen für Signale entsprechend der tatsächlichen Dauer jedes der Intervalle, für den Impulsspitzenverschiebungscode und für den ersten Gesamtdauercode zum Berechnen der Differenz zwischen der Summe der tatsächlichen Dauer der aufeinanderfolgenden Intervalle und der Summe ihrer Nenndauer,
wobei die Differenz ferner hinsichtlich der wiedergewonnenen Beträge der Impulsspitzenverschiebung des Startimpulses des ersten der aufeinanderfolgenden Intervalle und hinsichtlich des Endimpulses des letzten der aufeinanderfolgenden Intervalle korrigiert wird, so daß diese Differenz den Geschwindigkeitsfehler der Folge aufeinanderfolgender Intervalle darstellt, und die zweite Vorrichtung am Ausgang einen jene Differenz wiedergebenden Code liefert;
– eine Normierungseinrichtung mit Eingängen für den ersten und den zweiten Code und einen Ausgang zur Lieferung des Geschwindigkeitsfehlersignals durch Normierung der genannten Differenz auf der Basis der Gesamtdauer der Folge aufeinanderfolgender Intervalle.

2. Digitaldaten-Trennschaltung nach Anspruch 1, bei der die Geschwindigkeitsfehler-Meßeinrichtung (40) umfaßt:
– einen ersten Transcoder (41);
– einen zweiten Transcoder (42); und
– einen Addierer (43); wobei
der erste Transcoder am Eingang die geringwertigen Bits eines die tatsächliche Dauer eines Intervalls repräsentierenden Codes sowie die höherwertigen Bits des Geschwindigkeitsfehlercodes empfängt und am Ausgang einen ersten korrigierten Intervalldauer-Code liefert;
der zweite Transcoder am Eingang die höherwertigen Bits des die tatsächliche Dauer eines Intervalls repräsentierenden Codes sowie des Geschwindigkeitsfehlercodes empfängt und am Ausgang einen zweiten korrigierten Intervalldauer-Code liefert; und
der Addierer die Summe aus diesen beiden korrigierten Codes bildet und am Ausgang ein hinsichtlich der Trägergeschwindigkeit korrigiertes, der Dauer des Intervalls entsprechendes Signal liefert.

3. Digitaldaten-Trennschaltung nach Anspruch 1, bei der die Geschwindigkeitsfehler-Meßeinrichtung eine Geschwindigkeitsfehler-Extrapolationseinrichtung (90) umfaßt, bestehend aus einem Register (91) zum Speichern eines während einer ersten Periode von aufeinanderfolgenden Intervallen gemessenen Geschwindigkeitsfehlercodes und aus einem Transcoder (92, 93), der als Eingangssignal jenen während der ersten Periode gemessenen Geschwindigkeitsfehlercode sowie einen während einer auf die erste Periode folgenden zweiten Periode aufeinanderfolgender Intervalle gemessenen Geschwindigkeitsfehlercode erhält, und wobei der Transcoder auf der Basis einer Extrapolation der während der ersten und der zweiten Periode gemessenen Geschwindigkeitsfehler am Ausgang einen auf eine dritte Periode aufeinanderfolgender Intervalle bezogenen Geschwindigkeitsfehlercode liefert.

**Revendications**

1. Circuit de séparation de données digitales pour un dispositif pour lecture d'impulsions enregistrées sur milieu magnétique mobile affecté par une erreur de vitesse du milieu, où les impulsions de lecture sont affectées par un décalage de crête, comprenant une unité de mesure de durée (30) pour fournir une mesure de la durée réelle de chacun des intervalles entre deux impulsions de lecture subséquentes, une unité de correction d'erreur de vitesse (40) pour changer ladite durée réelle en une durée corrigée par rapport à l'erreur de vitesse du milieu, une unité de récupération de décalage de crête (50) pour attribuer à ladite durée corrigée une durée nominale d'intervalle et un montant récupéré de décalage de crête de l'impulsion de lecture finissant ledit intervalle et pour générer en sortie un code de durée nominale représentant ladite durée nominale et un code de décalage de crête représentant ledit montant récupéré de décalage de crête respectivement, et une unité de mesure d'erreur de vitesse (70) pour mesurer périodiquement ladite erreur de vitesse du milieu, caractérisé en ce que ladite unité de mesure d'erreur de vitesse (70) comprend :
- premiers moyens d'addition (71, 73, 79, 81, 86) pour sommer les durées nominales d'une pluralité d'intervalles subséquents, jusqu'à ce que la durée totale desdits intervalles soit égale ou supérieure à une durée préétablie, et pour fournir en sortie un premier code représentatif de ladite durée totale,
- deuxièmes moyens d'addition algébrique (76, 72, 74) ayant des entrées pour recevoir ladite durée réelle de chacun des intervalles, ledit code de décalage de crête et ledit premier code de durée totale, pour calculer la différence entre la somme des durées réelles de ladite pluralité d'intervalles subséquents et la somme de leurs durées nominales, ladite différence étant de plus corrigée par rapport aux montants récupérés de décalage de crête de l'impulsion de départ du premier desdits intervalles subséquents et de l'impulsion finale du dernier desdits intervalles subséquents de telle sorte que ladite différence représente l'erreur de vitesse de ladite pluralité d'intervalles subséquents, lesdits deuxièmes moyens fournissant en sortie un deuxième code représentatif de la dite différence et
- moyens de normalisation (80) ayant des entrées pour recevoir ledit premier et ledit deuxième code et une sortie pour fournir ladite erreur de vitesse du milieu par normalisation de ladite différence sur la base de la durée totale de ladite pluralité d'intervalles subséquents.

2. Circuit de séparation de données digitales selon la revendication 1 où ladite unité d'erreur de vitesse (40) comprend un premier transcodeur (41), un deuxième transcodeur (42) et un additionneur (43), ledit premier transcodeur recevant en entrée des bits les moins significatifs d'un code représentatif d'une durée réelle d'intervalle et des bits les plus significatifs dudit code d'erreur de vitesse et fournissant en sortie un premier code de durée corrigée, ledit deuxième transcodeur recevant en entrée des bits les plus significatifs dudit code représentatif d'une durée réelle d'intervalle et dudit code d'erreur de vitesse et fournissant en sortie un deuxième code de durée corrigée, ledit additionneur exécutant la somme desdits premier et deuxième codes de durée corrigée et fournissant en sortie un code représentatif de durée d'intervalle corrigée de vitesse.

3. Circuit de séparation de données digitales selon la revendication 1 où ladite unité de mesure d'erreur de vitesse comprend des moyens d'extrapolation d'erreur de vitesse (90) consistant en un registre (91) pour enregistrer un code d'erreur de vitesse mesuré sur une première période d'intervalles subséquents et en un transcodeur (92, 93) recevant en entrée ledit code d'erreur mesuré sur une première période d'intervalles subséquents et un code d'erreur de vitesse mesuré sur une deuxième période d'intervalles subséquents, subséquente à ladite première période, ledit transcodeur fournissant en sortie un code d'erreur de vitesse en rapport avec une troisième période d'intervalles subséquents, subséquente à ladite deuxième période, sur la base d'une extrapolation des codes d'erreur de vitesse mesurés sur lesdites première et deuxième périodes.

FIG.1

FIG.5

FIG.2

EP 0 222 132 B1

FIG.3

CLOCK

RAW DATA    N    —0—    0    —1—    1    —2—

STOP

REST

LOAD OUT

$T_0$

$T_1$

$T_2$

$T_3$

CNT 1÷6    N    0    1

$A_0 B_0$, PS 1÷6    N    0    1

EP 0 222 132 B1

FIG.4

FIG. 6

FIG. 7